# EUROPEAN PATENT SPECIFICATION

(11) **EP 3 379 889 B1**
(45) Date of publication and mention of the grant of the patent: **27.11.2019**
(21) Application number: 16887072.3
(22) Date of filing: 28.01.2016
(51) Int. Cl.: H04W 76/00, H04W 4/12

(54) **METHOD AND TERMINAL FOR CONTROLLING SERVICE CONNECTION**
VERFAHREN UND ENDGERÄT ZUR STEUERUNG EINER DIENSTVERBINDUNG
PROCÉDÉ ET TERMINAL DE COMMANDE DE CONNEXION DE SERVICE

(43) Date of publication of application: 26.09.2018
(73) Proprietor: Huawei Technologies Co., Ltd., Longgang District Shenzhen, Guangdong 518129 (CN)
(72) Inventor: MOU, Lei, Shenzhen Guangdong 518129 (CN); LI, Sen, Shenzhen Guangdong 518129 (CN)
(74) Representative: Körber, Martin Hans
(86) International application number: PCT/CN2016/072530
(87) International publication number: WO 2017/128185

(56) References cited:
- EP-A1- 2 905 944
- WO-A2-2005/125235
- CN-A- 102 131 152
- CN-A- 102 131 152
- CN-A- 102 857 985
- CN-A- 102 857 985
- CN-A- 103 079 285
- CN-A- 104 184 755
- US-A1- 2013 007 484
- US-B2- 7 302 479

## Description

### TECHNICAL FIELD

The present invention relates to the communications field, and more specifically, to a service connection control method and a terminal.

### BACKGROUND

With popularization of smartphones, more people surf the Internet by means of mobile networks. In a mobile network, signals may become unstable in places such as an elevator and a subway. In this case, a mobile phone temporarily cannot send or receive a signal. Most applications on a mobile phone communicate with a server by means of a TCP connection. When network signals are unstable, the mobile phone continually broadcasts that a network signal is interrupted and that a network signal is recovered. The applications on the mobile phone repeatedly initiate operations of disconnecting from the server and re-establishing a connection to the server. The continual attempts of the applications to re-establish a connection to the server result in high power consumption and network traffic consumption of the mobile phone. In addition, the re-establishment of the TCP connection between the mobile phone and the server requires processes of a three-way handshake and system authentication. Therefore, the connection re-establishment also causes a network delay.

Document EP 2905944 A1 discloses a method for restoring or establishing a media channel after a disconnected network connection is restored for webpage real-time communication (WebRTC).

Document WO 2005/125235 A2 discloses a Mobility Management Server (MMS) to handle session management in a mobile communication network and to act as an interface between a mobile communication network and an existing network infrastructure.

Document CN 102131152 A discloses a method for caching messages on a client side and on a server side if a network is interrupted temporarily and sending the cached messages after the network is restored.

Document CN 102857985 A discloses a server that ensures a same IP when a terminal switches between different communication networks.

### SUMMARY

Embodiments of the present invention provide a service connection control method and a terminal, to reuse an original service connection to the maximum extent, and reduce network delays caused by service connection re-establishment.

According to a first aspect, a service connection control method is provided, including: determining, by a terminal, that a network signal is interrupted; maintaining, by the terminal, a first service connection to a server, where the first service connection is a service connection that is used for communication between the server and the terminal before the network signal is interrupted; determining, by the terminal, that the network signal recovers to normal; and reusing, by the terminal, the first service connection if an Internet Protocol IP address of the terminal does not change within a first time interval, where the first time interval is a time interval between a moment at which the network signal is interrupted and a moment at which the network signal recovers to normal.

In this implementation, when a network signal is interrupted, a service connection between a server and a terminal is not blindly disrupted. Instead, when it is determined that an IP address of the terminal does not change after the network signal recovers, the original service connection is still used, network delays caused by connection re-establishment are reduced, and a traffic bandwidth and power consumption of the terminal are reduced.

With reference to the first aspect, in a first implementation of the first aspect, the method further includes: if the Internet Protocol IP address of the terminal changes within the first time interval, establishing, by the terminal, a third service connection to the server.

In this implementation, when a network signal is interrupted, a service connection between a server and a terminal is not blindly disrupted. Instead, a service connection is re-established when an IP address of the terminal changes after the network signal recovers. That is, a service connection is re-established only when the original service connection between the server and the terminal is indeed unavailable. Therefore, the original service connection can be reused to the maximum extent, network delays caused due to connection establishment are reduced, and a traffic bandwidth and power consumption of the terminal are reduced.

With reference to the first aspect or the foregoing implementation, in a second implementation of the first aspect, the reusing, by the terminal, the first service connection if an Internet Protocol IP address of the terminal does not change within a first time interval includes: determining that the IP address of the terminal does not change within the first time interval; sending a probe request message to the server, where the probe request message is used to detect a network status between the terminal and the server; receiving a probe response message sent by the server, where the probe response message is a response message for the probe request message; and reusing, by the terminal, the first service connection if the probe response message indicates that the network status between the server and the terminal is normal.

In this implementation, in an actual application scenario, an IP address of a terminal may not change, but a link between a server and the terminal, or the server, or the terminal may be faulty. In this case, to further improve reliability, the terminal may send a probe request message to the server to detect a network status between the terminal and the server, and then determine, according to a probe response message, whether to reuse an original service connection. Optionally, when the probe response message indicates that the network status is normal, the original service connection is reused.

With reference to the first aspect or the foregoing implementation, in a third implementation of the first aspect, the method further includes: if the probe response message indicates that the network status between the server and the terminal is abnormal, establishing, by the terminal, a second service connection to the server.

In this implementation, the terminal may determine, according to the probe response message, whether to reuse the original service connection, thereby further improving reliability of the reused original service connection. That is, the original service connection is still used only when the original service connection has high reliability. When the probe response message indicates that the network status is abnormal, that is, the original service connection is unavailable, a service connection is re-established.

With reference to the first aspect or the foregoing implementation, in a fourth implementation of the first aspect, the reusing, by the terminal, the first service connection if an Internet Protocol IP address of the terminal does not change within a first time interval includes: reusing, by the terminal, the first service connection if the IP address of the terminal does not change within the first time interval, and the first time interval is less than a first time interval threshold.

In this implementation, if network interruption lasts excessively long, the terminal may choose to re-establish a service connection to the server, to improve user experience.

With reference to the first aspect or the foregoing implementation, in a fifth implementation of the first aspect, the reusing, by the terminal, the first service connection if an Internet Protocol IP address of the terminal does not change within a first time interval includes: reusing, by the terminal, the first service connection if the IP address of the terminal does not change within the first time interval, and a distance between a first position and a second position of the terminal is less than a first distance threshold, where the first position is a position of the terminal when the network signal is interrupted, and the second position is a position of the terminal when the network signal recovers to normal.

In this implementation, if a movement distance of the terminal is excessively large, it may be considered that the original service connection is unavailable, and a network connection needs to be re-established. Therefore, in this embodiment of the present invention, the original service connection may be reused when the movement distance of the terminal is less than a threshold.

According to a second aspect, a terminal is provided. The terminal includes various modules configured to execute the method in the first aspect or any implementation of the first aspect.

According to a third aspect, a terminal is provided, including: a transceiver, a processor, a memory, and a bus system. The transceiver, the processor, and the memory are connected to each other by using the bus system. The memory is configured to store an instruction. The processor is configured to execute the instruction stored in the memory. When executing the instruction stored in the memory, the processor is enabled to execute the method in the first aspect or any implementation of the first aspect.

Based on the foregoing technical solutions, according to the service connection control method and the terminal in the embodiments of the present invention, when a network signal is interrupted, a service connection between a server and a terminal is not blindly disrupted. Instead, when it is determined that an IP address of the terminal does not change after the network signal recovers, the original service connection may be reused, network delays caused by connection re-establishment are reduced, and a traffic bandwidth and power consumption of the terminal are reduced.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a signaling flowchart in an application scenario according to an embodiment of the present invention;
FIG. 2 is a schematic flowchart of a service connection control method according to an embodiment of the present invention;
FIG. 3 is a logical flowchart of a service connection control method according to another embodiment of the present invention;
FIG. 4 is a signaling flowchart of a service connection control method according to an embodiment of the present invention;
FIG. 5 is a schematic block diagram of a terminal according to an embodiment of the present invention; and
FIG. 6 is a schematic block diagram of a terminal according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a Global System for Mobile Communications (English full name: Global System for Mobile Communications, GSM for short), a Code Division Multiple Access (English full name: Code Division Multiple Access, CDMA for short) system, a Wideband Code Division Multiple Access (English full name: Wideband Code Division Multiple Access Wireless, WCDMA for short), a general packet radio service (English full name: General Packet Radio Service, GPRS for short), and a Long Term Evolution (English full name: Long Term Evolution, LTE for short).

User equipment (English full name: User Equipment, UE for short), also referred to as a mobile terminal (English full name: Mobile Terminal, MT for short), mobile user equipment, and the like, may communicate with one or more core networks by using a radio access network (English full name: Radio Access Network, RAN for short). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus.

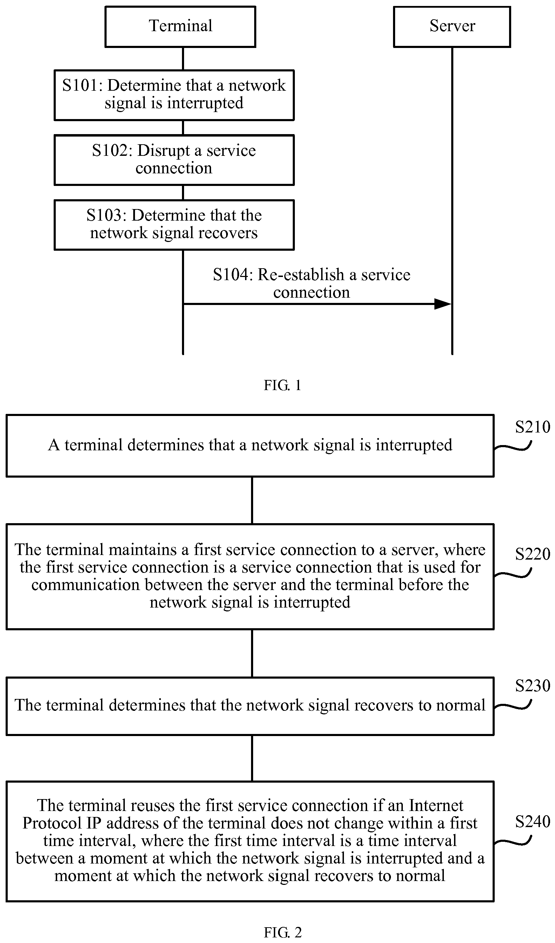

Before the embodiments of the present invention are described, a processing manner in the prior art when a signal is unstable is first described. FIG. 1 is a signaling flowchart when a signal is unstable according to the prior art.

S101: A terminal determines that a network signal is interrupted.

Specifically, the terminal periodically detects a status of the network signal. When the network signal is interrupted, a communications unit in the terminal sends a broadcast message. The broadcast message is used to notify all applications on the terminal that the network signal is interrupted, so that after receiving the broadcast message, the applications on the terminal disable an already established service connection to a server.

S102: The terminal disrupts a service connection to a server.

Specifically, when determining that the network signal is interrupted, the terminal needs to send a FIN (finish) packet. The FIN packet disables the service connection between the server and the terminal.

S103: The terminal determines that the network signal recovers.

Specifically, when the terminal detects that the network signal recovers to normal, the communications unit in the terminal sends another broadcast message. The broadcast message is used to notify all the applications on the terminal that the network signal recovers to normal, so that after receiving the broadcast message, the applications on the terminal establish a new service connection to the server.

S104: The terminal re-establishes a service connection to the server.

In actual application, a time interval between interruption and recovery of the network signal is usually short. In most cases, an original service connection between the server and the terminal is still available. Therefore, when the network signal is interrupted, it is not proper to blindly disrupt the network connection between the server and the terminal. Therefore, the embodiments of the present invention provide a service connection control method, to reuse the original service connection to the maximum extent.

FIG. 2 is a schematic flowchart of a service connection control method 200 according to an embodiment of the present invention. The method 200 may be executed by a terminal. As shown in FIG. 2, the method 200 includes the following steps:
S210: A terminal determines that a network signal is interrupted.
S220: The terminal maintains a first service connection to a server, where the first service connection is a service connection that is used for communication between the server and the terminal before the network signal is interrupted.
S230: The terminal determines that the network signal recovers to normal.
S240: The terminal reuses the first service connection if an Internet Protocol IP address of the terminal does not change within a first time interval, where the first time interval is a time interval between a moment at which the network signal is interrupted and a moment at which the network signal recovers to normal. Specifically, the terminal periodically detects a status of the network signal. When the terminal is in places such as an elevator and a subway in which the signal is unstable, the network signal is interrupted intermittently. In this case, the terminal detects that the network signal is interrupted. A communications unit in the terminal sends a first broadcast message to an application unit in the terminal. The first broadcast message is used to notify all application units in the terminal that the current network signal is interrupted. In the prior art, when the network signal is interrupted, the terminal disables an already established service connection to the server, and re-establishes a service connection between the terminal and the server after the network signal recovers. However, in an actual application scenario, when the network signal is interrupted, if the terminal does not send a FIN packet to the server, that is, the server does not receive the FIN packet sent by the terminal, the server considers that the service connection still exists. An application layer of the server detects, according to heartbeats, whether the service connection exists. Usually, a period of heartbeat detection is relatively long, and the application layer considers that the service connection is faulty only after the service connection cannot be detected by means of multiple times of heartbeat detection. Therefore, regardless of short-time interruption of the network signal, the server still considers that the service connection is available, provided that the terminal does not send the FIN packet. If the network signal recovers before the application layer discovers, according to heartbeats, that the service connection is faulty, in this case, the server considers that the service connection is available. If the IP address of the terminal does not change, the service connection already established between the terminal and the server before the network signal is interrupted is still available. Therefore, optionally, in this embodiment of the present invention, after determining that the network signal is interrupted, the terminal maintains the original service connection to the server. After the first time interval, the terminal determines that the network signal recovers. In this case, the application unit in the terminal receives a second broadcast message sent by the communications unit in the terminal. The second broadcast message is used to notify the application unit that the current network signal recovers. The terminal may determine, according to whether the IP address of the terminal changes within the first time interval, whether to reuse the original service connection between the terminal and the server or re-establish a service connection between the terminal and the server. Optionally, when the IP address of the terminal does not change, the terminal may consider that the original service connection established between the server and the terminal before the network signal is interrupted is still available. The terminal may choose to communicate with the server still by using the original service connection.

Therefore, according to the service connection control method in this embodiment of the present invention, when a network signal is interrupted, a service connection between a server and a terminal is not blindly disrupted. Instead, when it is determined that an IP address of the terminal does not change after the network signal recovers, the original service connection may be reused, network delays caused by connection re-establishment are reduced, and a traffic bandwidth and power consumption of the terminal are reduced.

For example, an instant messaging (Instant Messaging, IM) application on a mobile phone usually maintains a long-time service connection to the server, so as to receive a chat message or a notification message sent by the server. When a user enters a place such as an elevator or a subway with the mobile phone, a mobile phone signal may be interrupted. In this case, an operating system of the mobile phone notifies, in a broadcast manner, the application that the network signal is interrupted. In the prior art, the mobile phone disables the service connection to the server, and then re-establishes a connection after the network signal recovers. However, by means of the service connection control method in this embodiment of the present invention, the mobile phone maintains the service connection to the server. When the user gets out of the place such as the elevator or the subway, at this time, the mobile phone detects that the network signal recovers. In this case, the mobile phone determines that the IP of the mobile phone does not change, and the original service connection may be reused for communication.

Optionally, for an Android mobile phone terminal, the first broadcast message may be an android.net.conn.CONNECTIVITYCHANGE broadcast message. When the network signal is interrupted, an operating system of the mobile phone controls a communications unit in the mobile phone to send the android.net.conn.CONNECTIVITYCHANGE broadcast message, so as to notify all application units in the mobile phone that the current network signal is interrupted. The second broadcast message may be an android.net.conn.CONNECTIVITY_CHANGE broadcast message. When the network signal recovers, the operating system of the mobile phone controls the communications unit in the mobile phone to send the android.net.conn.CONNECTIVITY_CHANGE broadcast message, so as to notify all the application units that the current network signal recovers, so that the terminal re-establishes a service connection to the server. Optionally, the broadcast message carries an EXTRA_NO_CONNECTIVITY parameter. The parameter may indicate a current network status. If a value of the parameter is true, it indicates that a current network is interrupted. If a value of the parameter is false, it indicates that a current network is not interrupted. Optionally, in an embodiment, the method 200 further includes:
if the Internet Protocol IP address of the terminal changes within the first time interval, establishing, by the terminal, a third service connection to the server.

Specifically, if the IP address of the terminal changes, for example, a mobile phone terminal of China Mobile accesses a nearest network, and if the mobile terminal is in a roaming state (for example, in another province), an IP address of the mobile phone changes, in this case, it may be considered that the service connection between the server and the terminal before the network signal is interrupted is unavailable after a network recovers. After the network signal recovers, the terminal needs to re-establish a service connection to the server for normal communication.

Optionally, in an embodiment, the reusing, by the terminal, the first service connection if an Internet Protocol IP address of the terminal does not change within a first time interval includes:
determining that the IP address of the terminal does not change within the first time interval;
sending a probe request message to the server, where the probe request message is used to detect a network status between the terminal and the server;
receiving a probe response message sent by the server, where the probe response message is a response message for the probe request message; and
reusing, by the terminal, the first service connection if the probe response message indicates that the network status between the server and the terminal is normal.

Specifically, usually, in a case of only handover between base stations or cells, the IP address of the terminal does not change. For example, a mobile phone terminal of China Unicom accesses a network according to a home location, and an IP address of the terminal still does not change even in a roaming state. When the IP address of the terminal does not change, it may be considered that the original service connection between the server and the terminal before the network signal is interrupted is still available. In this case, the terminal may communicate with the server still by using the original service connection. Alternatively, to further ensure reliability, the terminal may send the probe request message to the server. The probe request message is used to detect the network status between the terminal and the server. Then, the terminal determines, according to the actual network status between the terminal and the server, whether to reuse the original service connection or re-establish a service connection to the server. For example, the terminal may determine, according to the probe response message, whether to reuse the original service connection or re-establish a service connection to the server. The probe response message is a response message for the probe request message. The probe response message may be used to indicate the current network status. Optionally, when the probe response message indicates that the current network status is normal, the terminal may choose to communicate with the server by reusing the original service connection. For example, when the terminal receives a connection successful message indicating that the network status between the terminal and the server is normal, in this case, the terminal may choose to communicate with the server by reusing the original service connection. When the probe response message indicates that the current network status is abnormal, for example, a network adapter of the server is faulty, or software of the server is faulty, or other link problems occur, the terminal cannot normally communicate with the server. In this case, the terminal may choose to re-establish a service connection to the server.

Optionally, in an embodiment, the method 200 further includes:
if the probe response message indicates that the network status between the server and the terminal is abnormal, establishing, by the terminal, a second service connection to the server.

Specifically, when the terminal receives the probe response message indicating that the service connection between the server and the terminal is abnormal, for example, when the terminal receives a connection reset message, it indicates that the network status between the terminal and the server is abnormal. The terminal needs to re-establish a service connection to the server for normal communication. In other words, although the IP address of the terminal does not change, in this case, if the server is faulty or other link problems occur, the network status between the server and the terminal may be abnormal. In this case, the original service connection is unavailable. Therefore, the terminal needs to re-establish a service connection to the server for subsequent communication.

Optionally, the probe request message may be a user-defined message packet, and is used to detect the network status between the server and the terminal. When needing to detect the network status between the terminal and the server, the terminal sends the message packet to the server. When receiving the message packet, the server may return a self-defined message packet to indicate the current network status. This is not limited in this embodiment of the present invention.

It should be understood that in this embodiment of the present invention, that connection successful is used to indicate that the network status is normal and connection reset is used to indicate that the network status is abnormal is merely an example, and does not constitute any limitation to this embodiment of the present invention. In this embodiment of the present invention, alternatively, connection ok may be used to indicate that the network status is normal and connection failure may be used to indicate that the network status is abnormal, or the like. This embodiment of the present invention is not limited thereto.

Optionally, in this embodiment of the present invention, the reusing, by the terminal, the first service connection if an Internet Protocol IP address of the terminal does not change within a first time interval includes:
reusing, by the terminal, the first service connection if the IP address of the terminal does not change within the first time interval, and the first time interval is less than a first time interval threshold. Specifically, in this embodiment of the present invention, when the IP address of the terminal does not change within the first time interval, the original service connection may be reused. However, if the first time interval is greater than a threshold, that is, a network has been interrupted for an excessively long time, a user needs to wait for an excessively long time. In this case, if a service connection is still not re-established, user experience is affected. Therefore, in this embodiment of the present invention, further, when it is determined that the IP address of the terminal does not change within the first time interval, and the first time interval is less than the first time interval threshold, the original service connection may be reused. This not only ensures that the original service connection can be used to the maximum extent, but also ensures that the user experience is not affected due to an excessively long waiting time. Optionally, if the first time interval is greater than the first time interval threshold, the terminal may choose to re-establish a service connection to the server, to ensure normal use of the user.

Optionally, in an embodiment, the reusing, by the terminal, the first service connection if an Internet Protocol IP address of the terminal does not change within a first time interval includes:
reusing, by the terminal, the first service connection if the IP address of the terminal does not change within the first time interval, and a distance between a first position and a second position of the terminal is less than a first distance threshold, where the first position is a position of the terminal when the network signal is interrupted, and the second position is a position of the terminal when the network signal recovers to normal.

Specifically, in this embodiment of the present invention, when the IP address of the terminal does not change within the first time interval, the original service connection may be reused. However, if a movement distance of the terminal is greater than a threshold within the first time interval, it may be understood as that the network has been interrupted for an excessively long time, or it may be understood as that an excessively large movement distance may result in a change of the IP address. In this case, the terminal needs to re-establish a connection to the server. Therefore, in this embodiment of the present invention, further, when it is determined that the IP address of the terminal does not change within the first time interval, and the movement distance of the terminal within the first time interval is less than the first distance threshold, the original service connection may be reused. Optionally, if the movement distance is greater than the first distance threshold, the terminal may choose to re-establish a service connection to the server.

Therefore, according to the service connection control method in this embodiment of the present invention, when a network signal is interrupted, a service connection between a server and a terminal is not blindly disrupted. Instead, it may be determined, according to whether an IP address of the terminal changes after the network signal recovers, whether to still use the original service connection or re-establish a service connection. Therefore, the original service connection can be reused to the maximum extent, network delays caused due to connection re-establishment are reduced, and a traffic bandwidth and power consumption of the terminal are reduced.

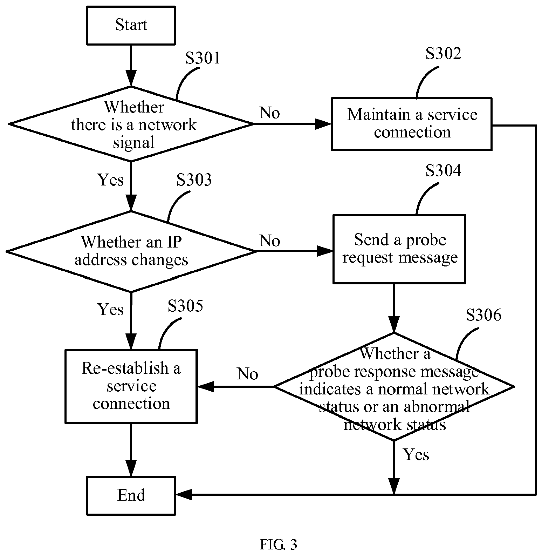

FIG. 3 is a schematic flowchart of a service connection control method according to a specific embodiment of the present invention.

S301: A terminal determines whether there is a network signal.

If there is no network signal, the procedure goes to S302; otherwise, the procedure goes to S303.

S302: The terminal maintains an original service connection to a server. The original service connection is a service connection that is used for communication between the server and the terminal before the network signal is interrupted. That is, in this embodiment of the present invention, when the network signal is interrupted, the terminal does not blindly disrupt the service connection. Instead, the terminal first maintains the original service connection between the server and the terminal.

S303: Determine whether an IP address of the terminal changes.

If the IP address of the terminal does not change, the procedure goes to S304; otherwise, the procedure goes to S305, in which the terminal re-establishes a service connection to the server.

S304: The terminal sends a probe request message to the server. The probe request message is used to detect a network status between the server and the terminal.

Optionally, the terminal may detect, by using a ping command, whether a network status between the server and the terminal is normal. For example, whether the network between the server and the terminal is normal may be detected by pinging an IP address of the server. Specifically, the terminal may determine, by sending a data packet to the server and then requesting the server to return a same data packet, whether the network between the server and the terminal is normal. If the data packet returned by the server and the data packet sent by the terminal are the same, it is determined that the network between the terminal and the server is normal; otherwise, it is determined that the network between the terminal and the server is abnormal.

S306: Receive a probe response message of the server, and determine, according to the probe response message, whether a network status is normal.

For example, if the terminal detects the network status by using the ping command, when the data packet returned by the server and the data packet sent by the terminal are the same, the terminal may determine that the network status is normal; otherwise, determine that the network status is abnormal.

If the network status is normal, the procedure ends, and the terminal communicates with the server still by using the original service connection. If the network status is abnormal, the procedure goes to S305, in which the terminal re-establishes a service connection to the server.

Therefore, according to the service connection control method in this embodiment of the present invention, when a network signal is interrupted, a service connection between a server and a terminal is not blindly disrupted. Instead, it may be determined, according to whether an IP address of the terminal changes after the network signal recovers, whether to still use the original service connection or re-establish a service connection. Therefore, the original service connection can be reused to the maximum extent, network delays caused due to connection re-establishment are reduced, and a traffic bandwidth and power consumption of the terminal are reduced.

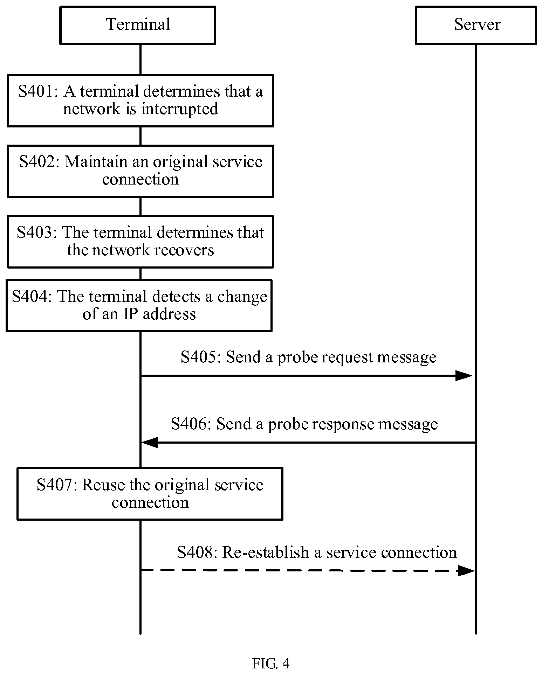

FIG. 4 is a signaling flowchart of a service connection control method according to a specific embodiment of the present invention.

S401: At a first moment, a terminal device detects that a network signal is interrupted.

S402: When determining that the network signal is interrupted, the terminal maintains an original service connection to a server. The original service connection is a service connection that is used for communication between the server and the terminal before the network signal is interrupted.

Specifically, in the prior art, when a network is interrupted, the terminal sends a FIN packet to the server, to disrupt the service connection to the server. In this embodiment of the present invention, when the network signal is interrupted, the terminal does not send the FIN packet to the server. That is, in this case, the server still considers the current service connection available. When the network signal recovers, if an IP address of the terminal does not change, the terminal may communicate with the server by reusing the current service connection, thereby saving a process of re-establishing a service connection.

S403: At a second moment, the terminal device detects that the network signal recovers.

S404: The terminal detects whether an IP address of the terminal changes within a first time interval between the first moment and the second moment.

If the IP address of the terminal does not change within the first time interval, the procedure goes to S405. Otherwise, the procedure goes to S408, in which the terminal re-establishes a service connection to the server. S405: The terminal sends a probe request message to the server. The probe request message is used to detect a network status between the terminal and the server.

S406: The terminal receives a probe response message sent by the server. The probe response message is a response message for the probe request message, and the probe response message is used to indicate the network status between the server and the terminal.

If the probe response message indicates that the current network status is normal, the procedure goes to S407, and the terminal may perform network communication with the server by reusing the original service connection.

If the probe response message indicates that the current network status is abnormal, the procedure goes to S408, in which the terminal re-establishes a service connection to the server.

Therefore, according to the service connection control method in this embodiment of the present invention, when a network signal is interrupted, a service connection between a server and a terminal is not blindly disrupted. Instead, it may be determined, according to whether an IP address of the terminal changes after the network signal recovers, whether to still use the original service connection or re-establish a service connection. Therefore, the original service connection can be reused to the maximum extent, network delays caused due to connection re-establishment are reduced, and a traffic bandwidth and power consumption of the terminal are reduced.

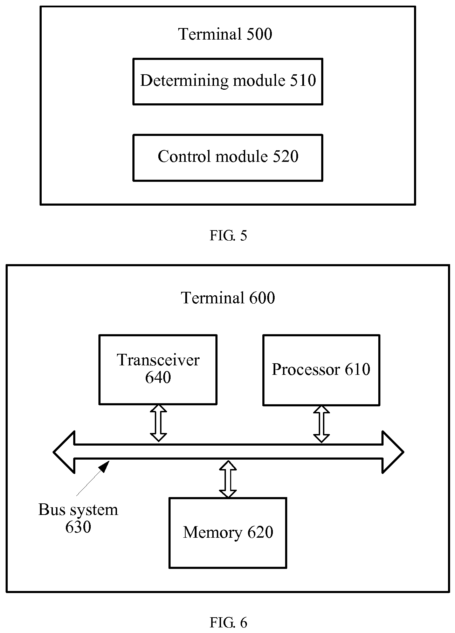

FIG. 5 is a schematic block diagram of a terminal 500 according to an embodiment of the present invention. The a terminal includes:
a determining module 510, configured to determine that a network signal is interrupted; and
a control module 520, configured to maintain a first service connection between the terminal and a server, where the first service connection is a service connection that is used for communication between the server and the terminal before the network signal is interrupted.

The determining module 510 is further configured to determine that the network signal recovers to normal. The determining module 510 is configured to determine whether an Internet Protocol IP address of the terminal changes within a first time interval. The first time interval is a time interval between a moment at which the network signal is interrupted and a moment at which the network signal recovers to normal.

The control module 520 is further configured to reuse the first service connection when the determining module 510 determines that the IP address of the terminal does not change.

It should be understood that a function of the control module 520 may be implemented by a software program, for example, may be implemented by putting the software program into a process, or may be implemented by a software module on a hardware chip, or may be implemented by a combination of a hardware module and a software module, or the like.

Therefore, according to the service connection control apparatus in this embodiment of the present invention, when a network signal is interrupted, a service connection between a server and a terminal is not blindly disrupted. Instead, when it is determined that an IP address of the terminal does not change after the network signal recovers, the original service connection may be reused, network delays caused by connection re-establishment are reduced, and a traffic bandwidth and power consumption of the terminal are reduced. Optionally, in an embodiment, the terminal 500 further includes:
a transceiver module, configured to: when the determining module 510 determines that the IP address of the terminal does not change, send a probe request message to the server, where the probe request message is used to detect a network status between the terminal and the server, and receive a probe response message sent by the server, where the probe response message is a response message for the probe request message.

The control module 520 is further configured to reuse the first service connection when the probe response message indicates that the network status between the server and the terminal is normal.

Optionally, in an embodiment, the control module 520 is further configured to:
when the probe response message indicates that the network status between the server and the terminal is abnormal, establish a second service connection between the terminal and the server.

Optionally, in an embodiment, the control module 520 is further configured to:
reuse the first service connection when the IP address of the terminal does not change within the first time interval, and the first time interval is less than a first time interval threshold.

Optionally, in this embodiment of the present invention, the control module 520 is further configured to:
reuse the first service connection when the IP address of the terminal does not change within the first time interval, and a distance between a first position and a second position of the terminal is less than a first distance threshold, where the first position is a position of the terminal when the network signal is interrupted, and the second position is a position of the terminal when the network signal recovers to normal. Therefore, according to the terminal in this embodiment of the present invention, when a network signal is interrupted, a service connection is not blindly disrupted. Instead, it may be determined, according to whether an IP address of the terminal changes after a network recovers, whether to reuse the original service connection or re-establish a service connection. Therefore, the original service connection can be reused to the maximum extent, network delays caused due to connection re-establishment are reduced, and a traffic bandwidth and power consumption of the terminal are reduced.

The terminal 500 according to this embodiment of the present invention may correspond to the terminal in the service connection control method 200 in the foregoing embodiment of the present invention, and the foregoing and other operations and/or functions of the modules in the terminal 500 are separately performed to implement corresponding procedures of the foregoing method. Details are not repeated herein for brevity.

As shown in FIG. 6, a terminal 600 is further provided according to an embodiment of the present invention. As shown in FIG. 6, the terminal 600 includes a processor 610, a memory 620, a bus system 630, and a transceiver 640. The processor 610, the memory 620, and the transceiver 640 are connected to each other by using the bus system 630. The memory 620 is configured to store an instruction. The processor 610 is configured to execute the instruction stored in the memory 620, so as to control the transceiver 640 to receive a signal or send a signal. The processor 610 is configured to: determine that a network signal is interrupted, and when the network signal is interrupted, maintain a first service connection between the terminal and a server. The first service connection is a service connection that is used for communication between the server and the terminal before the network signal is interrupted. The processor 610 is further configured to: determine that the network signal recovers to normal, and determine whether an Internet Protocol IP address of the terminal changes within a first time interval. The first time interval is a time interval between a moment at which the network signal is interrupted and a moment at which the network signal recovers to normal. The processor 610 is further configured to reuse the first service connection when determining that the IP address of the terminal does not change.

It should be understood that the method 200 disclosed in the foregoing embodiment of the present invention may be applied to the processor 610, or be implemented by the processor 610. The processor 610 may be an integrated circuit chip and have a signal processing capability. In an implementation process, each step of the foregoing method 200 may be completed by using an integrated logical circuit of hardware in the processor 610 or an instruction in a form of software. The foregoing processor 610 may be a general purpose processor, a digital signal processor (Digital Signal Processor, DSP), an application-specific integrated circuit (Application Specific Integrated Circuit, ASIC), a field-programmable gate array (Field Programmable Gate Array, FPGA), or another programmable logic device, discrete gate or transistor logic device, or discrete hardware component. The methods, steps, and logical block diagrams disclosed in the embodiments of the present invention may be implemented or performed. The general purpose processor may be a microprocessor or the processor may be any conventional processor or the like. Steps of the methods disclosed in the embodiments of the present invention may be directly performed and completed by a hardware decoding processor, or may be performed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory 620, and the processor 610 reads information in the memory and completes the steps in the foregoing methods in combination with hardware of the processor 610.

It may be understood that the memory 620 in the embodiments of the present invention may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. RAMs in many forms such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM) may be used. Those are examples rather than limitative descriptions. The memory in the method and the terminal described in this specification intends to include, but is not limited to, these memories and any other memory of a suitable type.

It may be understood that the embodiments described in this specification may be implemented by hardware, software, firmware, middleware, microcode, or a combination thereof. For hardware implementation, a processor may be implemented in one or more application-specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general purpose processor, a controller, a micro-controller, a microprocessor, and other electronic units configured to execute the functions described in the present invention, or a combination of the above.

When the embodiments are implemented in software, firmware, middleware, microcode, program code, or a code segment, they may be stored in, for example, a machine-readable medium of a storage component. The code segment may indicate a process, a function, a subprogram, a program, a routine, a subroutine, a module, a software group, a type, or any combination of an instruction, a data structure, and a program statement. The code segment may be coupled to another code segment or a hardware circuit by transferring and/or receiving information, data, an independent variable, a parameter, or memory content. The information, the independent variable, the parameter, data, or the like may be transferred, forwarded, or sent in any suitable manner such as memory sharing, message transfer, token transfer, or network transmission.

For implementation by software, the technologies in this specification may be implemented by performing the functional modules (for example, a process and a function) in this specification. Software code may be stored in a memory and executed by a processor. The memory may be implemented inside the processor or outside the processor. In the latter case, the memory may be coupled to the processor by means of communication by using various means known in the art.

The bus system 630 may include a power bus, a control bus, a status signal bus, and the like in addition to a data bus. However, for clear description, various types of buses in the figure are marked as the bus system 630. Therefore, according to the terminal in this embodiment of the present invention, when a network signal is interrupted, a service connection is not blindly disrupted. Instead, it may be determined, according to whether an IP address of the terminal changes after a network recovers, whether to reuse the original service connection or re-establish a service connection. Therefore, the original service connection can be reused to the maximum extent, network delays caused due to connection re-establishment are reduced, and a traffic bandwidth and power consumption of the terminal are reduced.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processor, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service connection control method, comprising:
determining (S210), by a terminal, that a network signal is interrupted;
maintaining (S220), by the terminal, a first service connection to a server, wherein the first service connection is a service connection that is used for communication between the server and the terminal before the network signal is interrupted;
determining (S230), by the terminal, that the network signal recovers to normal; and
reusing (S240), by the terminal, the first service connection if an Internet Protocol, IP, address of the terminal does not change within a first time interval, wherein the first time interval is a time interval between a moment at which the network signal is interrupted and a moment at which the network signal recovers to normal.

2. The method according to claim 1, wherein the reusing, by the terminal, the first service connection if an IP address of the terminal does not change within a first time interval comprises:
determining that the IP address of the terminal does not change within the first time interval;
sending (S405) a probe request message to the server, wherein the probe request message is used to detect a network status between the terminal and the server;
receiving (S406) a probe response message sent by the server, wherein the probe response message is a response message for the probe request message; and
reusing (407), by the terminal, the first service connection if the probe response message indicates that the network status between the server and the terminal is normal.

3. The method according to claim 2, wherein the method further comprises:
if the probe response message indicates that the network status between the server and the terminal is abnormal, establishing (S408), by the terminal, a second service connection to the server.

4. The method according to any one of claims 1 to 3, wherein the reusing, by the terminal, the first service connection if an IP address of the terminal does not change within a first time interval comprises:
reusing, by the terminal, the first service connection if the IP address of the terminal does not change within the first time interval, and the first time interval is less than a first time interval threshold.

5. The method according to any one of claims 1 to 4, wherein the reusing, by the terminal, the first service connection if an IP address of the terminal does not change within a first time interval comprises:
reusing, by the terminal, the first service connection if the IP address of the terminal does not change within the first time interval, and a distance between a first position and a second position of the terminal is less than a first distance threshold, wherein the first position is a position of the terminal when the network signal is interrupted, and the second position is a position of the terminal when the network signal recovers to normal.

6. The method according to any one of claims 1 to 5, wherein the method further comprises:
if the IP address of the terminal changes within the first time interval, establishing, by the terminal, a third service connection to the server.

7. A terminal (500, 600), wherein the terminal (500, 600) comprises:
a determining module (510), configured to determine that a network signal is interrupted; and
a control module (520), configured to maintain a first service connection between the terminal (500, 600) and a server, wherein the first service connection is a service connection that is used for communication between the server and the terminal (500, 600) before the network signal is interrupted, wherein
the determining module (510) is further configured to determine that the network signal recovers to normal;
the determining module (510) is further configured to determine whether an Internet Protocol, IP, address of the terminal (500, 600) changes within a first time interval, wherein the first time interval is a time interval between interruption of the network signal and recovery of the network signal to normal; and
the control module (520) is further configured to reuse the first service connection when the determining module (510) determines that the IP address of the terminal (500, 600) does not change.

8. The terminal (500, 600) according to claim 7, wherein the terminal (500, 600) further comprises:
a transceiver module (640), configured to: when the determining module (510) determines that the IP address of the terminal (500, 600) does not change, send a probe request message to the server, wherein the probe request message is used to detect a network status between the terminal (500, 600) and the server, and receive a probe response message sent by the server, wherein the probe response message is a response message for the probe request message, wherein
the control module (520) is further configured to reuse the first service connection when the probe response message indicates that the network status between the server and the terminal (500, 600) is normal.

9. The terminal (500, 600) according to claim 8, wherein the control module (520) is further configured to:
when the probe response message indicates that the network status between the server and the terminal (500, 600) is abnormal, establish a second service connection between the terminal (500, 600) and the server.

10. The terminal (500, 600) according to any one of claims 7 to 9, wherein the control module (520) is further configured to:
reuse the first service connection when the IP address of the terminal (500, 600) does not change within the first time interval, and the first time interval is less than a first time interval threshold.

11. The terminal (500, 600) according to any one of claims 7 to 10, wherein the control module (520) is further configured to:
reuse the first service connection when the IP address of the terminal (500, 600) does not change within the first time interval, and a distance between a first position and a second position of the terminal (500, 600) is less than a first distance threshold, wherein the first position is a position of the terminal (500, 600) when the network signal is interrupted, and the second position is a position of the terminal (500, 600) when the network signal recovers to normal.

12. The terminal (500, 600) according to any one of claims 7 to 11, wherein the control module (520) is further configured to:
when the determining module (510) determines that the IP address of the terminal (500, 600) changes, establish a third service connection between the terminal (500, 600) and the server.

## Patentansprüche

1. Dienstverbindungssteuerungsverfahren, umfassend:
Bestimmen (S210), durch ein Endgerät, dass ein Netzwerksignal unterbrochen ist;
Aufrechterhalten (S220), durch das Endgerät, einer ersten Dienstverbindung zu einem Server, wobei die erste Dienstverbindung eine Dienstverbindung ist, die für die Kommunikation zwischen dem Server und dem Endgerät verwendet wird, bevor das Netzwerksignal unterbrochen wird;
Bestimmen (S230), durch das Endgerät, dass sich das Netzwerksignal wieder normalisiert; und
Wiederverwenden (S240), durch das Endgerät, der ersten Dienstverbindung, wenn sich eine Internetprotokoll (IP)-Adresse des Endgeräts nicht innerhalb eines ersten Zeitintervalls ändert, wobei das erste Zeitintervall ein Zeitintervall zwischen einem Zeitpunkt ist, zu dem das Netzwerksignal unterbrochen wird, und einem Zeitpunkt, zu dem sich das Netzwerksignal wieder normalisiert.

2. Verfahren nach Anspruch 1, wobei das Wiederverwenden, durch das Endgerät, der ersten Dienstverbindung, wenn sich eine IP-Adresse des Endgeräts nicht innerhalb eines ersten Zeitintervalls ändert, umfasst:
Bestimmen, dass sich die IP-Adresse des Endgeräts innerhalb des ersten Zeitintervalls nicht ändert;
Senden (S405) einer Prüfanforderungsnachricht an den Server, wobei die Prüfanforderungsnachricht verwendet wird, um einen Netzwerkstatus zwischen dem Endgerät und dem Server zu erkennen;
Empfangen (S406) einer von dem Server gesendeten Prüfantwortnachricht, wobei die Prüfantwortnachricht eine Antwortnachricht auf die Prüfanforderungsnachricht ist; und
Wiederverwenden (407), durch das Endgerät, der ersten Dienstverbindung, wenn die Prüfantwortnachricht angibt, dass der Netzwerkstatus zwischen dem Server und dem Endgerät normal ist.

3. Verfahren nach Anspruch 2, wobei das Verfahren ferner umfasst:
wenn die Prüfanforderungsnachricht angibt, dass der Netzwerkstatus zwischen dem Server und dem Endgerät abnormal ist, Herstellen (S408), durch das Endgerät, einer zweiten Dienstverbindung zu dem Server.

4. Verfahren nach einem der Ansprüche 1 bis 3, wobei das Wiederverwenden, durch das Endgerät, der ersten Dienstverbindung, wenn sich eine IP-Adresse des Endgeräts nicht innerhalb eines ersten Zeitintervalls ändert, umfasst:
Wiederverwenden, durch das Endgerät, der ersten Dienstverbindung, wenn sich die IP-Adresse des Endgeräts innerhalb des ersten Zeitintervalls nicht ändert und das erste Zeitintervall kleiner als ein erster Zeitintervallschwellenwert ist.

5. Verfahren nach einem der Ansprüche 1 bis 4, wobei das Wiederverwenden, durch das Endgerät, der ersten Dienstverbindung, wenn sich eine IP-Adresse des Endgeräts nicht innerhalb eines ersten Zeitintervalls ändert, umfasst:
Wiederverwenden, durch das Endgerät, der ersten Dienstverbindung, wenn sich die IP-Adresse des Endgeräts nicht innerhalb des ersten Zeitintervalls ändert und ein Abstand zwischen einer ersten Position und einer zweiten Position des Endgeräts kleiner als ein erster Abstandsschwellenwert ist, wobei die erste Position eine Position des Endgeräts ist, wenn das Netzwerksignal unterbrochen ist, und die zweite Position eine Position des Endgeräts ist, wenn sich das Netzwerksignal wieder normalisiert.

6. Verfahren nach einem der Ansprüche 1 bis 5, wobei das Verfahren ferner umfasst:
wenn sich die IP-Adresse des Endgeräts innerhalb des ersten Zeitintervalls ändert, Herstellen, durch das Endgerät, einer dritten Dienstverbindung zu dem Server.

7. Endgerät (500, 600), wobei das Endgerät (500, 600) umfasst:
ein Bestimmungsmodul (510), das konfiguriert ist, um zu bestimmen, dass ein Netzwerksignal unterbrochen ist; und
ein Steuerungsmodul (520), das konfiguriert ist, um eine erste Dienstverbindung zwischen dem Endgerät (500, 600) und einem Server aufrechtzuerhalten, wobei die erste Dienstverbindung eine Dienstverbindung ist, die für die Kommunikation zwischen dem Server und dem Endgerät (500, 600) verwendet wird, bevor das Netzwerksignal unterbrochen wird, wobei
das Bestimmungsmodul (510) ferner konfiguriert ist, um zu bestimmen, dass sich das Netzwerksignal wieder normalisiert;
das Bestimmungsmodul (510) ferner konfiguriert ist, um zu bestimmen, ob sich eine Internetprotokoll (IP)-Adresse des Endgeräts (500, 600) innerhalb eines ersten Zeitintervalls ändert, wobei das erste Zeitintervall ein Zeitintervall zwischen der Unterbrechung des Netzwerksignals und der Normalisierung des Netzwerksignals ist; und
das Steuerungsmodul (520) ferner konfiguriert ist, um die erste Dienstverbindung wiederzuverwenden, wenn das Bestimmungsmodul (510) bestimmt, dass sich die IP-Adresse des Endgeräts (500, 600) nicht ändert.

8. Endgerät (500, 600) nach Anspruch 7, wobei das Endgerät (500, 600) ferner umfasst:
ein Transceivermodul (640), das konfiguriert ist, um: wenn das Bestimmungsmodul (510) bestimmt, dass sich die IP-Adresse des Endgeräts (500, 600) nicht ändert, eine Prüfanforderungsnachricht an den Server zu senden, wobei die Prüfanforderungsnachricht verwendet wird, um einen Netzwerkstatus zwischen dem Endgerät (500, 600) und dem Server zu erkennen und eine von dem Server gesendete Prüfantwortnachricht zu empfangen, wobei die Prüfantwortnachricht eine Antwortnachricht auf die Prüfanforderungsnachricht ist, wobei das Steuerungsmodul (520) ferner konfiguriert ist, um die erste Dienstverbindung wiederzuverwenden, wenn die Prüfantwortnachricht angibt, dass der Netzwerkstatus zwischen dem Server und dem Endgerät (500, 600) normal ist.

9. Endgerät (500, 600) nach Anspruch 8, wobei das Steuerungsmodul (520) ferner konfiguriert ist, um:
wenn die Prüfanforderungsnachricht angibt, dass der Netzwerkstatus zwischen dem Server und dem Endgerät (500, 600) abnormal ist, eine zweite Dienstverbindung zwischen dem Endgerät (500, 600) und dem Server herzustellen.

10. Endgerät (500, 600) nach einem der Ansprüche 7 bis 9, wobei das Steuerungsmodul (520) ferner konfiguriert ist, um:
die erste Dienstverbindung wiederzuverwenden, wenn sich die IP-Adresse des Endgeräts (500, 600) innerhalb des ersten Zeitintervalls nicht ändert und das erste Zeitintervall kleiner als ein erster Zeitintervallschwellenwert ist.

11. Endgerät (500, 600) nach einem der Ansprüche 7 bis 10, wobei das Steuerungsmodul (520) ferner konfiguriert ist, um:
die erste Dienstverbindung wiederzuverwenden, wenn sich die IP-Adresse des Endgeräts (500, 600) innerhalb des ersten Zeitintervalls nicht ändert und ein Abstand zwischen einer ersten Position und einer zweiten Position des Endgeräts (500, 600) kleiner als ein erster Abstandsschwellenwert ist, wobei die erste Position eine Position des Endgeräts (500, 600) ist, wenn das Netzwerksignal unterbrochen ist, und die zweite Position eine Position des Endgeräts (500, 600) ist, wenn sich das Netzwerksignal wieder normalisiert.

12. Endgerät (500, 600) nach einem der Ansprüche 7 bis 11, wobei das Steuerungsmodul (520) ferner konfiguriert ist, um:
wenn das Bestimmungsmodul (510) bestimmt, dass sich die IP-Adresse des Endgeräts (500, 600) ändert, eine dritte Dienstverbindung zwischen dem Endgerät (500, 600) und dem Server herzustellen.

## Revendications

1. Procédé de commande de connexion de service, comprenant :
la détermination (S210), par un terminal, qu'un signal de réseau est interrompu ;
le maintien (S220), par le terminal, d'une première connexion de service à un serveur,
dans lequel la première connexion de service est une connexion de service qui est utilisée pour la communication entre le serveur et le terminal avant que le signal de réseau soit interrompu ;
la détermination (S230), par le terminal, que le signal de réseau revient à la normale ; et
la réutilisation (S240), par le terminal, de la première connexion de service si une adresse de protocole Internet, IP, du terminal ne change pas au cours d'un premier intervalle de temps, dans lequel le premier intervalle de temps est un intervalle de temps entre un moment où le signal de réseau est interrompu et un moment où le signal de réseau revient à la normale.

2. Procédé selon la revendication 1, dans lequel la réutilisation, par le terminal, de la première connexion de service si une adresse IP du terminal ne change pas au cours d'un premier intervalle de temps, comprend :
la détermination que l'adresse IP du terminal ne change pas au cours du premier intervalle de temps ;
l'envoi (S405) d'un message de requête de sonde au serveur, dans lequel le message de requête de sonde est utilisé pour détecter un état de réseau entre le terminal et le serveur ;
la réception (S406) d'un message de réponse de sonde envoyé par le serveur, dans lequel le message de réponse de sonde est un message de réponse au message de requête de sonde ; et
la réutilisation (407), par le terminal, de la première connexion de service si le message de réponse de sonde indique que l'état du réseau entre le serveur et le terminal est normal.

3. Procédé selon la revendication 2, le procédé comprenant en outre :
si le message de réponse de sonde indique que l'état du réseau entre le serveur et le terminal est anormal, l'établissement (S408), par le terminal, d'une deuxième connexion de service au serveur.

4. Procédé selon l'une quelconque des revendications 1 à 3, dans lequel la réutilisation, par le terminal, de la première connexion de service si une adresse IP du terminal ne change pas au cours d'un premier intervalle de temps, comprend :
la réutilisation, par le terminal, de la première connexion de service si l'adresse IP du terminal ne change pas au cours du premier intervalle de temps, et si le premier intervalle de temps est inférieur à un premier seuil d'intervalle de temps.

5. Procédé selon l'une quelconque des revendications 1 à 4, dans lequel la réutilisation, par le terminal, de la première connexion de service si une adresse IP du terminal ne change pas au cours d'un premier intervalle de temps, comprend :
la réutilisation, par le terminal, de la première connexion de service si l'adresse IP du terminal ne change pas au cours du premier intervalle de temps, et si une distance entre une première position et une deuxième position du terminal est inférieure à un premier seuil de distance, dans lequel la première position est une position du terminal lorsque le signal de réseau est interrompu, et la deuxième position est une position du terminal lorsque le signal de réseau revient à la normale.

6. Procédé selon l'une quelconque des revendications 1 à 5, le procédé comprenant en outre :
si l'adresse IP du terminal change au cours du premier intervalle de temps, l'établissement, par le terminal, d'une troisième connexion de service au serveur.

7. Terminal (500, 600), le terminal (500, 600) comprenant :
un module de détermination (510), configuré pour déterminer qu'un signal de réseau est interrompu ; et
un module de commande (520), configuré pour maintenir une première connexion de service entre le terminal (500, 600) et un serveur, dans lequel la première connexion de service est une connexion de service qui est utilisée pour la communication entre le serveur et le terminal (500, 600) avant que le signal de réseau soit interrompu, dans lequel
le module de détermination (510) est en outre configuré pour déterminer que le signal de réseau revient à la normale ;
le module de détermination (510) est en outre configuré pour déterminer si une adresse de protocole Internet, IP, du terminal (500, 600) change au cours d'un premier intervalle de temps, dans lequel le premier intervalle de temps est un intervalle de temps entre l'interruption du signal de réseau et le retour à la normale du signal de réseau ; et
le module de commande (520) est en outre configuré pour réutiliser la première connexion de service lorsque le module de détermination (510) détermine que l'adresse IP du terminal (500, 600) ne change pas.

8. Terminal (500, 600) selon la revendication 7, le terminal (500, 600) comprenant en outre :
un module émetteur-récepteur (640), configuré pour : lorsque le module de détermination (510) détermine que l'adresse IP du terminal (500, 600) ne change pas, envoyer un message de requête de sonde au serveur, dans lequel le message de requête de sonde est utilisé pour détecter un état de réseau entre le terminal (500, 600) et le serveur, et recevoir un message de réponse de sonde envoyé par le serveur, dans lequel le message de réponse de sonde est un message de réponse au message de requête de sonde, dans lequel
le module de commande (520) est en outre configuré pour réutiliser la première connexion de service lorsque le message de réponse de sonde indique que l'état du réseau entre le serveur et le terminal (500, 600) est normal.

9. Terminal (500, 600) selon la revendication 8, dans lequel le module de commande (520) est en outre configuré pour :
lorsque le message de réponse de sonde indique que l'état du réseau entre le serveur et le terminal (500, 600) est anormal, établir une deuxième connexion de service entre le terminal (500, 600) et le serveur.

10. Terminal (500, 600) selon l'une quelconque des revendications 7 à 9, dans lequel le module de commande (520) est en outre configuré pour :
réutiliser la première connexion de service lorsque l'adresse IP du terminal (500, 600) ne change pas au cours du premier intervalle de temps et que le premier intervalle de temps est inférieur à un premier seuil d'intervalle de temps.

11. Terminal (500, 600) selon l'une quelconque des revendications 7 à 10, dans lequel le module de commande (520) est en outre configuré pour :
réutiliser la première connexion de service lorsque l'adresse IP du terminal (500, 600) ne change pas au cours du premier intervalle de temps et qu'une distance entre une première position et une deuxième position du terminal (500, 600) est inférieure à un premier seuil de distance, dans lequel la première position est une position du terminal (500, 600) lorsque le signal de réseau est interrompu, et la deuxième position est une position du terminal (500, 600) lorsque le signal de réseau revient à la normale.

12. Terminal (500, 600) selon l'une quelconque des revendications 7 à 11, dans lequel le module de commande (520) est en outre configuré pour :
lorsque le module de détermination (510) détermine que l'adresse IP du terminal (500, 600) change, établir une troisième connexion de service entre le terminal (500, 600) et le serveur.
